# EUROPÄISCHE PATENTSCHRIFT

(11) **EP 3 047 232 B1**
(45) Veröffentlichungstag und Bekanntmachung des Hinweises auf die Patenterteilung: **06.04.2022**
(21) Anmeldenummer: 14766678.8
(22) Anmeldetag: 09.09.2014
(51) Int. Cl.: G01B 11/02, G01B 11/04, G01B 11/06, G01B 11/10, G01B 11/24

(54) **VERFAHREN UND VORRICHTUNG ZUR ERMITTLUNG EINER GEOMETRIE EINES BEHÄLTNISSES ZUR VERPACKUNG EINES FLIESSFÄHIGEN MEDIUMS**
METHOD AND DEVICE FOR ESTABLISHING A GEOMETRY OF A CONTAINER FOR PACKAGING A FLOWABLE MEDIUM
PROCÉDÉ ET DISPOSITIF DE DÉTERMINATION DE LA GÉOMÉTRIE D'UN CONTENANT DESTINÉ À L'EMBALLAGE D'UNE SUBSTANCE LIQUIDE

(30) Priorität: 16.09.2013 DE 102013110202
(43) Veröffentlichungstag der Anmeldung: 27.07.2016
(73) Patentinhaber: Steinfurth Mess-Systeme GmbH, 45309 Essen (DE)
(72) Erfinder: FALKENSTEIN, Martin, 44795 Bochum (DE)
(74) Vertreter: Bals, Rüdiger
(86) Internationale Anmeldenummer: PCT/EP2014/069212
(87) Internationale Veröffentlichungsnummer: WO 2015/036403

(56) Entgegenhaltungen:
- CH-A5- 645 462
- US-A- 4 170 417
- US-A- 4 751 386
- US-A- 5 311 291
- US-A1- 2012 217 403
- US-B1- 6 549 292

## Beschreibung

Die vorliegende Erfindung betrifft ein Verfahren und eine Vorrichtung zur Ermittlung einer Geometrie eines Behältnisses zur Verpackung eines insbesondere fließfähigen Mediums.

Grundlegend sind Systeme zur Ermittlung einer Oberfläche oder auch der Kontur von Gegenständen bekannt. So gibt es beispielsweise taktile Sensoren, welche einzelne Oberflächenpunkte eines Gegenstandes durch eine mechanische Abtastung ermitteln. Des Weiteren ist beispielsweise der Einsatz von Kamerasystemen, insbesondere zur Ermittlung einer Außenkontur eines Gegenstandes, bekannt. Hierbei werden optisch erfassbare zwei- oder auch dreidimensionale Messpunkte, mittels des Kamerasystems erfasst und derart transformiert, dass das System ein entsprechendes Bild und folglich eine zwei- oder auch dreidimensionale Kontur des abgetasteten Gegenstandes erzeugt. Als Abtastvorrichtung kann dabei beispielsweise auch eine Lichtquelle zur Erzeugung eines Lichtmusters auf einer Oberfläche des zu vermessenden Gegenstandes dienen, wobei dieses Lichtmuster von der Oberfläche reflektiert und von einer Kamera des Systems erfasst wird. Derartige Verfahren dienen vornehmlich zur Vermessung einer Außenkontur eines Gegenstandes mit vornehmlich strahlungsreflektierender Oberfläche. Würde die Lichtstrahlung von dem Material des zu vermessenden Gegenstandes weitgehend absorbiert werden, würde dies zu einer ungenauen bzw. fehlerhaften Bestimmung der Außenkontur führen. Im schlechtesten Fall wäre eine Vermessung und Bestimmung der Außenkontur des Gegenstandes gar nicht möglich. Eine Vermessung bzw. Ermittlung der Außenkontur eines Gegenstandes kann beispielsweise neben der Überwachung des Herstellungsprozesses des Gegenstandes selbst auch dazu dienen einen nachfolgenden Bearbeitungsprozess zur Bearbeitung des Gegenstandes in Berücksichtigung der Kontur und Ausgestaltung des Gegenstandes einstellen zu können.

Aber nicht nur die Außenkontur, sondern auch die Ausgestaltung der Innenkontur und/oder die Maße der Wandstärke, insbesondere eines Behältnisses, wie beispielsweise einer Flasche oder einer Lebensmittelverpackung, sind Werte, welche beispielsweise im Herstellungsprozess des Behältnisses selbst, oder auch im Befüllung- bzw. Abfüllprozess des Behältnisses oder weiteren Untersuchungen, wie z. B. Haltbarkeitsuntersuchungen zu berücksichtigen sind. Gerade bei Haltbarkeitsuntersuchungen ist es ein Nachteil, dass häufig das Behältnis, in dem das insbesondere flüssige Medium beispielsweise in Form eines Lebensmitteins bzw. Getränkes angeordnet ist, für die Untersuchung geöffnet bzw. zerstört wird. Eine zerstörungsfreie Untersuchung findet i. d. R. mit optischen Sensoren statt. Insbesondere für die Ermittlung der Wandstärke und/oder der Außenkontur sind grundlegend Licht- und Kamerasystemen bekannt, welche entlang eines Produktionspfades zur Herstellung bzw. Behandlung des Behältnisses angeordnet sind, um in zeit- und kostenintensiver Art und Weise unterschiedliche Bereiche des Behältnisses abzutasten und zu vermessen, um einzelne Werte hinsichtlich der Geometrie des Behältnisses ermitteln zu können. Eine Vermessung eines Behältnisses ist folglich nicht nur zeitaufwendig, sondern auch aufgrund des Einsatzes zusätzlicher Vermessungseinrichtungen kostenintensiv und fehleranfällig.

Die Schrift US 5,311,291 A offenbart beispielsweise eine Vorrichtung zur Ermittlung einer äußeren Geometrie eines Objektes, insbesondere einer Zigarette, mittels einer Strahlungseinrichtung. Auch die weiteren Schriften US 4,170,417 A, US 4,751,386 A und CH 645 462 A5 offenbaren teilweise ein Verfahren und/oder eine Vorrichtung zur Ermittlung einer äußeren Geometrie und/oder einer Position eines Objektes durch eine optische Strahlungseinrichtung. Die Schrift US 6,549,292 B1 offenbart ein Verfahren zur Untersuchung der Geometrie und der Wandstärke von Objekten mittels eines aufgespaltenen Lichtstrahls. Die Schrift US 2012/0217403 A1 offenbart eine Vorrichtung zur Ermittlung der Materialeigenschaft eines Behältnisses für den anschließenden Recycelprozess.

Es ist daher die Aufgabe der vorliegenden Erfindung, die voranstehend beschriebenen Nachteile zumindest teilweise zu beheben. Insbesondere ist es Aufgabe der vorliegenden Erfindung eine Vorrichtung und ein Verfahren zur Ermittlung einer Geometrie eines Behältnisses, welches als Verpackung insbesondere eines fließfähigen Mediums dient, zu schaffen, und mittels welchen vornehmlich neben der Erfüllung weiterer Funktionen auf einfache und kostengünstige Art und Weise zumindest auch eine Außenkontur des Behältnisses ermittelt werden kann. Dabei soll möglichst vorhandene Sensoren zurückgegriffen werden.

Die voranstehende Aufgabe wird gelöst durch ein Verfahren zur Ermittlung einer Geometrie eines Behältnisses zur Verpackung eines insbesondere fließfähigen Mediums mit den Merkmalen des Anspruchs 1 sowie durch eine Vorrichtung zur Ermittlung einer Geometrie eines Behältnisses zur Verpackung eines insbesondere fließfähigen Mediums mit den Merkmalen gemäß des Anspruchs 7. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung und jeweils umgekehrt, so dass bezüglich der Offenbarung zu den einzelnen Erfindungsaspekten stets wechselseitig Bezug genommen wird beziehungsweise werden kann. Außerdem kann das erfindungsgemäße Verfahren auf der erfindungsgemäßen Vorrichtung durchgeführt werden.

In dem folgenden Text wird nur noch von einem fließfähigen Medium in dem Behältnis geschrieben, worunter jegliche Form von Lebensmittel, auch feste, körnige oder zähflüssige Lebensmittel oder dergleichen verstanden werden können. Insbesondere sind jedoch unter dem Begriff: "fließfähigen Medium" Getränke jeglicher Art zu verstehen. Bei dem Begriff "Behältnis" kann es sich vorzugsweise um eine Flasche aus Glas oder Kunststoff, insbesondere PET-Flaschen (PET - Polyethylenterephthalat) handeln. Kunststoff-Flaschen lassen sich mit einer exakten Geometrie herstellen sind jedoch über einen längeren Zeitraum nicht unbedingt druck- bzw. gasdicht, sodass z. B. CO₂ aus den Getränken entweichen kann.

Das erfindungsgemäße Verfahren ist definiert durch die Merkmale des Anspruchs 1.

Mittels des erfindungsgemäßen Verfahrens ist es folglich denkbar, eine Außenkontur bzw. eine Außengeometrie eines Behältnisses zu ermitteln bzw. zu detektieren. Das Behältnis selbst kann dabei zumindest abschnittsweise ein Kunststoffmaterial, wie Polyethylen, Polypropylen, Polyvinylchlorid, Acrylglas oder ein Glasmaterial, wie Siliciumdioxid oder natürlichen Bernstein aufweisen. Vorteilhaft dient das Behältnis dazu ein fließfähiges und vornehmlich flüssiges Medium, wie beispielsweise ein Getränk oder ein trinkbares Lebensmittel zu verpacken und dieses vor qualitätsschädigenden Einflüssen zu schützen. Es ist jedoch auch denkbar, dass das Behältnis dazu dient anderweitig haltbar zu machende Produkte, wie Tiefkühlwaren, Wurstwaren usw. zu verpacken. Es ist folglich möglich, dass das Behältnis eine Flasche ist bzw. eine flaschenartige Ausgestaltung aufweist, wobei das Behältnis folglich einen Behältnisboden und einen Mündungsbereich mit beispielsweise einem Halsbereich aufweist. Dabei kann der Halsbereich einen geringeren Behältnisaußendurchmesser aufweisen als beispielsweise ein Bereich des Behältnisbodens. Über den Mündungsbereich, welcher vorteilhaft eine Öffnung aufweist, kann das fließfähige Medium beispielsweise während eines vorangegangenen Befüllungsprozesses in das Behältnis eingebracht werden. Des Weiteren ist das Behältnis vorzugsweise mittels eines auf der Öffnung aufgebrachten Verschlusselementes derart verschlossen, dass weder das fließfähige Medium noch ein in dem Behältnis möglicherweise befindliches gasförmiges Medium, wie beispielsweise Luft, aus dem Behältnis entweichen kann. Vorteilhaft wird eine Strahlungseinrichtung, welche eine Strahlungsquelle und eine Strahlungssenke aufweist derart aktiviert, dass die Strahlungsquelle eine elektromagnetische Strahlung und insbesondere elektromagnetische Wellen, wie beispielsweise Infrarotstrahlung, aussendet, vorzugsweise in Richtung der Strahlungssenke. Dabei durchquert die elektromagnetische Strahlung einen Bereich bzw. Raum, welcher im nachfolgenden als Detektionsbereich bzw. Detektionsraum bezeichnet wird und sich vornehmlich zwischen der Strahlungsquelle und der Strahlungssenke insbesondere dreidimensional erstreckt. Es ist jedoch auch denkbar, dass die Strahlungssenke an der Vorrichtung nicht gegenüberliegend zur Strahlungsquelle, sondern auf der gleichen Seite, wie die Strahlungsquelle an der Vorrichtung angeordnet ist, sodass sich der Detektionsbereich ausgehend von der Strahlungsquelle und damit auch ausgehend von der Strahlungssenke bis zu einem Reflexionselement, welches vornehmlich an der Vorrichtung in horizontaler Richtung gegenüberliegend der Strahlungsquelle und folglich auch der Strahlungssenke angeordnet ist, erstreckt. Es ist in diesem Fall auch möglich, dass die Strahlungsquelle im Wesentlichen die Strahlungssenke ist. Demnach wird die Strahlung ausgehend von der Strahlungsquelle durch den Detektionsbereich bis zu dem Reflexionselement gesandt und von diesem zurück durch den Detektionsbereich bis zur Strahlungssenke reflektiert. Folglich ist es denkbar, dass hierbei die Strahlungseinrichtung neben der Strahlungssenke und der Strahlungsquelle auch das Reflexionselement umfasst bzw. aufweist. Es ist des Weiteren möglich, dass die Strahlungsquelle auch eine Vielzahl von im Wesentlichen zumindest (über eine Höhe) abschnittsweise verlaufenden elektromagnetischen Strahlungen aussendet, so dass die einzelnen Strahlen, welche beispielsweise als Linearstrahlen den Detektionsbereich durchlaufen, in Form einer Zeilenstrahlung mit einer Vielzahl von Strahlen den Detektionsbereich durchlaufen. Vorteilhaft werden folglich zwei oder mehr Strahlen insbesondere über die Höhe Hx von der Strahlungsquelle, welche auch zwei und mehr Strahlungsquelleneinheiten zum Versenden jeweils einer Strahlung bzw. Welle aufweisen kann, ausgesandt. Während der Ermittlung der Geometrie des Behältnisses bzw. um diese Geometrie des Behältnisses ermitteln zu können, wird das Behältnis zumindest mit einem Behältnisbereich und vornehmlich mit einem Halsbereich oder einen Mündungsbereich wenigstens zweitweise während des Ermittlungsvorganges bzw. des Messvorganges durch wenigstens einen Bereich bzw. Abschnitt des Detektionsbereiches bewegt. Dabei kann das Behältnis beispielsweise um einen Drehpunkt oder eine Drehachse bewegt bzw. geschwenkt bzw. gekippt werden, sodass das Behältnis zumindest zweitweise aus wenigstens einer horizontalen Positionierung, in welcher sich die Längsachse im Wesentlichen horizontal (parallel zum Horizont) erstreckt, in eine vertikale Positionierung, in welcher sich die Längsachse des Behältnisses im Wesentlichen vertikal (senkrecht zum Horizont) erstreckt, bewegt wird. Vorteilhaft wird das Behältnis solange bewegt bzw. gedreht bzw. gekippt, bis der zumindest eine Bereich und insbesondere Halsbereich des Behältnisses vollständig durch den Detektionsbereich gelaufen und wieder aus diesem ausgetreten ist. Idealerwiese wird diese Bewegung des Behältnisses durch den Detektionsbereich mit einer definierten und insbesondere konstanten Geschwindigkeit v durch geführt, die bekannt ist. Mittels einer Detektionseinrichtung wird die Zeit Δt bzw. die Zeitpunkte T1 und T2 vom Eintreten des Bereiches des Behältnisses in den Detektionsbereich bis zum Austreten dieses Bereiches aus dem Detektionsbereich gemessen. Das bedeutet, dass sobald die von der Strahlungsquelle ausgesandte Strahlung derart durchbrochen wird, dass die Strahlungssenke eine veränderte und insbesondere verringerte Strahlung bzw. ein verändertes und insbesondere verringertes Strahlungssignal S empfängt, aufgrund beispielsweise der Brechung und/oder Absorption zumindest eines Teils der Strahlung bzw. des Strahles an der bzw. durch die Wandung bzw. den Wandungen des Behältnisses, detektiert die Detektionseinrichtung ein Eintreten des wenigstens einen Bereiches des Behältnisses in den Detektionsbereich. Demzufolge kann die Detektionseinrichtung ein Austreten des Bereiches des Behältnisses ermitteln bzw. erkennen, sobald beispielsweise die Strahlungssenke wieder die ursprüngliche Intensität der Strahlung, welche vor dem Eintreten des Behältnisses in den Detektionsbereich vorlag, empfängt. Während der Bewegung des Behältnisses findet vorteilhaft nicht nur eine Messung einer Geometrie des Behältnisses, sondern zumindest zeitweise gleichzeitig auch eine Durchmischung der innerhalb des Behältnisses befindlichen Medien statt. Demnach wird das fließfähige Medium beispielsweise mit einem gasförmigen Medium derart durchmischt, bis sich vorteilhaft ein Phasengleichgewichtszustand, zwischen beiden Medien einstellt, bei welchem folglich beide Medien den gleichen Druck, insbesondere den gleichen Absolutdruck und die gleiche Temperatur aufweisen. Insbesondere bei Kohlenstoffdioxidhaltigen Getränken ist es erforderlich, dass das Getränk eine vordefinierte Kohlenstoffdioxidkonzentration aufweist, welche für eine bestimmte Qualität und auch Haltbarkeit des Getränkes erforderlich ist. So ist es bei der Abfüllung von kohlenstoffdioxidhaltigen Getränken erforderlich insbesondere im Stichprobenverfahren zu überprüfen, ob die angefüllten Behältnisse bzw. Flaschen einer Produktionscharge ein flüssiges bzw. fließfähiges Medium aufweisen, welches eine hinreichende Kohlenstoffdioxidkonzentration aufweist. Dazu kann beispielsweise in einem zerstörenden Prüfverfahren mittels eines Anstichdorns insbesondere ein Bereich eines Verschlusselementes durchstochen werden, um Messelemente, wie einen Temperatursensor und/oder einen Drucksensor fluidtechnisch mit dem flüssigen und/oder dem gasförmigen Medium, wie dem Kohlenstoffdioxid, welches aus dem flüssigen Medium austritt, in Verbindung zu bringen. Um auswertbare Messergebnisse zu erhalten, ist es unter anderem erforderlich ein Phasengleichgewicht innerhalb des Behältnisses zwischen den Medien zu erzeugen. Dies kann durch ein Durchmengen der bestehenden Medien und/oder ein Temperieren der Medien und/oder ein Austreten des gasförmigen Mediums aus dem flüssigen Medium ermöglicht werden. Sollen beispielsweise ein gasförmiges Medium aus dem flüssigen Medium austreten, wird vorteilhaft das Behältnis geschüttelt bzw. gedreht bzw. auf einer Bewegungsbahn bewegt, wobei hierdurch auch eine Durchmengung der Medienstattfinden kann. Eine derartig gezielt verursachtes Austreten lassen von gasförmigem Medium aus dem flüssigen Medium wird auch als Probenvorbereitung verstanden. Demzufolge wird vorteilhaft die Ermittlung der Geometrie des Behältnisses zumindest zeitweise gleichzeitig mit der Probenvorbereitung durchgeführt, wobei vorteilhaft kein zusätzliches Gerät erforderlich ist, wodurch Platz in beispielsweise einem Prüflabor oder auch in der Produktionslinie eingespart wird. Zudem werden die Prüf- und/oder Produktionskosten insbesondere aufgrund einer verkürzten Prüfdauer reduziert.

Im Rahmen der Erfindung ist es denkbar, dass neben der äußeren Geometrie bzw. der Außenkontur des Behältnisses auch eine innere Geometrie des Behältnisses ermittelt wird. Vorteilhaft wird hierbei die innere Geometrie aus einem Wert der äußeren Geometrie und einem Wert einer Wandstärke des Behältnisses ermittelt bzw. berechnet. Die dazu verwendete Vorrichtung kann beispielsweise eine Berechnungseinrichtung sein, wobei es auch denkbar ist, dass die zuvor genannte Detektionseinrichtung die Ermittlung der inneren Geometrie durchführt. Werte der Wandstärke, insbesondere eine im Mündungsbereich bzw. Halsbereich bzw. Kopfbereich oder Kopfraum des Behältnisses vorliegende Wandstärke kann beispielsweise in einer Datenbank innerhalb einer Speichereinrichtung für unterschiedliche Behältnisse und folglich für unterschiedliche Außengeometrien gespeichert bzw. hinterlegt sein. Folglich ist es denkbar, dass die Detektionseinrichtung eine Zeit des Durchlaufens des Behältnisabschnittes durch den Detektionsbereich erkennt, dadurch eine äußere Geometrie ermittelt, diese Werte beispielsweise an eine Berechnungseinrichtung übersendet, welche wiederum die zu den ermittelten Werten korrelierenden Werte aus der Datenbank zu einer Wandstärke des Behältnisses ausliest und folglich damit die Innenkontur des Behältnisses ermittelt.

Es ist des Weiteren denkbar, dass zumindest ein Wert der Wandstärke des Behältnisses und vorzugsweise auch eine Vielzahl an Werten für die Wandstärke insbesondere in unterschiedlichen Bereichen insbesondere Höhen des Behältnisses mittels der Strahlungseinrichtung und/oder mittels einer zweiten Strahlungseinrichtung ermittelt wird/werden. Dabei ist es denkbar, dass die erste Strahlungseinrichtung, welche vornehmlich auch zur Ermittlung der Außenkontur bzw. Außengeometrie des Behältnisses verwendet wird, beispielsweise derart geschwenkt bzw. positioniert wird, dass die Strahlung lediglich durch eine Wandung des Behältnisses geleitet wird (ohne durch einen Innenraum gelenkt zu werden), bevor diese von der Strahlungssenke aufgenommen wird. Aufgrund der auf die Strahlungssenke auftreffenden Strahlungsintensität und/oder -streuung könnte nun folglich die Wandstärke zumindest in einem Bereich des Behältnisses ermittelt werden. Trifft dieser Strahl nunmehr auch auf den Innenraum des Behältnisses findet wieder eine Veränderung der Strahlungsintensität und/oder -streuung statt. Da man auch die Zeit Δt bzw. die Zeitpunkte T1 und T2 vom Eintreten des Bereiches der Behältniswand in den Detektionsbereich bis zum Eintreten des Bereiches der in den Detektionsbereich messen kann, lässt sich auch die Wandstärke an der Stelle des Detektionsbereich aus den Zeitinformationen und der Bewegungsgeschwindigkeit v des Behältnisses bestimmen. Auch der Austritt des Bereiches des Behältnisinnenraum bzw. der Behältniswand aus dem Detektionsbereich ist auf diese Art und Weise zu bestimmen, so dass man die linke und rechte Wandstärke an einer Stelle der Strahlung messtechnisch erfassen kann. Aus diesen Informationen und den weiteren Informationen lässt sich die Geometrie des Behältnisses exakt bestimmen oder zusätzlich kontrollieren, falls beispielsweise bereits ein Geometriewert, wie z: B. die Wandstärke bekannt sein sollte.

Es ist jedoch des Weiteren auch denkbar, dass neben der ersten Strahlungseinrichtung auch eine zweite oder dritte Strahlungseinrichtung innerhalb der Vorrichtung, wie oben beschrieben, insbesondere höhenversetzt angeordnet ist. Durch den Höhenversatz bzw. die unterschiedlichen Höhen Hx des Detektionsbereiches lässt sich die gesamte Kontur des Behältnisses über die (Mess-) Höhe Hx nach dem erfindungsgemäßen Verfahren bestimmen. Hierzu können viele einzelne Lichtpunkte der Strahlungsquellen der Strahlungseinrichtung in einer Zeile übereinader angeordnet sein, die von zeilenförmigen Strahlungssenken messtechnisch erfassbar sind. Auch ist es denkbar, dass die Strahlungseinrichtung automatisch höhenverstellbar ist und somit der Höhenversatz erzeugbar ist, um die Geometrie des Behältnisses über die Höhe zu bestimmen. Dabei muss bei jeder Höhe Hx dann eine einzelne Messung stattfinden. Sofern jedoch eine zeilenförmige Strahlungsquelle und Strahlungssenke verwendet werden, findet eine simultane Vermessung der Geometrie des Behältnisses über die Höhe Hx statt.

Auch ist es denkbar, dass eine weitere oder auch die erste Strahlungseinrichtung derart angeordnet ist, dass die von der Strahlungsquelle ausgesandte Strahlung im Wesentlichen parallel zu der Innenwandung und/oder zu der Außenwandung im Seitenbereich oder im Bodenbereich des Behältnisses verläuft. Die Strahlungssenke ist dabei vornehmlich derart angeordnet ist, dass diese insbesondere die Strahlung aufnimmt bzw. empfängt, welche nicht von dem Material der Wandung weitestgehend absorbiert wurde.

Im Rahmen der Erfindung ist vorgesehen, dass die Strahlungseinrichtung zeitlich während oder zeitlich nachfolgend der Ermittlung der Geometrie des Behältnisses zur Ermittlung einer physikalischen, chemischen und/oder biologischen Eigenschaft des fließfähigen Mediums verwendet wird. Dabei kann eine physikalische Eigenschaft beispielsweise eine Dichte oder das Absorptions- und Emissionsspektrum, eine chemische Eigenschaft beispielsweise die bereits aufgezeigte Kohlenstoffdioxidkonzentration und eine biologische Eigenschaft beispielsweise eine Bakterienkonzentration optisch bestimmt werden. Vornehmlich nach dem Einstellen eines Phasengleichgewichtszustandes zwischen den einzelnen Medien innerhalb des Behältnisses wird mittels der erfindungsgemäßen Vorrichtung auch eine Eigenschaft bzw. ein Eigenschaftswert des fließfähigen Mediums und vorteilhaft die Kohlenstoffdioxidkonzentration des Mediums durch diese Strahlungseinrichtung, die auch zur Geometriebestimmung verwendet wird, bestimmt. So kann beispielswiese die Temperatur des fließfähigen Mediums innerhalb des Behältnisses durch eine Infrarot-Messung erfasst werden. Ferner kann elektromagnetische Strahlung ausgehend von der Strahlungsquelle durch einen Bereich des Behältnisses zu einer Strahlungssenke der Strahlungseinrichtung gesandt werden, welcher nicht mit dem fließfähigen Medium, sondern mit dem gasförmigen Medium, das heißt vorzugsweise mit den Kohlenstoffdioxid gefüllt ist, um den Kohlenstoffdioxid zu bestimmen. Demzufolge wird die Strahlung insbesondere durch einen Halsbereich bzw. Mündungsbereich bzw. Kopfbereich des Behältnisses geleitet, sofern das Behältnis vorteilhaft aufrecht stehend mit dem Mündungsbereich nach oben ausgerichtet ist. Bei der Messung bzw. Ermittlung der Eigenschaft wird durch den Einsatz der Strahlungseinrichtung vornehmlich ein Gesamtdruck, das heißt ein Absolutdruck im Inneren des Behältnisses bei einer definierten Temperatur ermittelt, wobei die Kohlenstoffdioxidkonzentration als Partialdruck des gasförmigen Medium dargestellt wird. Hierbei wird das Henry-Gesetz angewandt, welches besagt, dass der Partialdruck eines Gases bzw. eines gasförmigen Medium über einer Flüssigkeit direkt proportional zur Konzentration des Gases in dem flüssigen Medium ist. Dabei ist es denkbar, dass während der Ermittlung der Eigenschaft das Behältnis dieses um dessen Längsachse mit einer definierten und insbesondere konstanten Geschwindigkeit v gedreht wird. So wäre es möglich, dass das Behältnis drei Messungen unterzogen wird, wobei nach jeder Messung das Behältnis um ca. 60° um seine Längsachse in eine Richtung (links oder rechts) gedreht wird, bis das Behältnis nach drei Messungen um 180° um seine Längsachse gedreht wurde. Erfindungsgemäß wird folglich die zur Ermittlung der Geometrie des Behältnisses verwendete Strahlungseinrichtung gleichermaßen zur Ermittlung einer Eigenschaft des in dem Behältnis befindlichen fließfähigen Mediums verwendet. Dadurch wird wiederum ein zusätzliches Messgerät eingespart, was wiederum eine Platzersparnis im Messlabor bzw. innerhalb der Produktionslinie sowie auch eine Zeit- und Kostenersparnis mit sich bringt. Insbesondere bei der Ermittlung einer Eigenschaft des fließfähigen Mediums mittels einer Strahlungseinrichtung und insbesondere mittels eines Lasers bzw. einer Infrarotstrahlungseinrichtung, ist es erforderlich die Innengeometrie bzw. die Innenkontur des Behältnisses zu kennen, um Messverfälschungen der Eigenschaft basierend auf der Behältnisgeometrie ausschließen bzw. die Behältnisgeometrie in die Berechnungen zur Eigenschaft des fließfähigen Mediums mit einbeziehen zu können.

Folglich ist es des Weiteren denkbar, dass die Strahlungsquelle der Strahlungseinrichtung eine Infrarotstrahlung zumindest indirekt an die Strahlungssenke der Strahlungseinrichtung sendet, welche von einer zu ermittelnden physikalischen, chemischen und/oder biologischen Eigenschaft des fließfähigen Medium zumindest teilweise absorbiert und/oder reflektiert wird. Indirekt bedeutet vorliegend, dass die Strahlung an einen bereits oben genannten Spiegel bzw. eine Reflexionseinrichtung gesandt wird, welche die Strahlung bzw. die Wellen vorzugsweise nahezu verlustfrei an die Strahlungssenke zurück reflektiert.

Es ist auch möglich, dass die Wellenlänge der ausgesandten elektromagnetischen Strahlung zumindest zeitweise während der Ermittlung der Geometrie des Behältnisses und/oder der Ermittlung der physikalischen, chemischen und/oder biologischen Eigenschaft des fließfähigen Mediums variiert wird. Dadurch kann vorteilhaft die Messgenauigkeit erhöht werden.

Es ist des Weiteren eine erfindungsgemäße Vorrichtung zur Ermittlung einer Geometrie eines Behältnisses zur Verpackung eines fließfähigen Mediums beansprucht, welche zumindest eine Bewegungseinrichtung zum Drehen und/oder Schwenken des Behältnisses um eine Drehachse, eine Strahlungseinrichtung zum Erzeugen und Aussenden zumindest elektromagnetischer Strahlung von einer Strahlungsquelle der Strahlungseinheit entlang eines Detektionsbereiches zu einer Strahlungssenke der Strahlungseinrichtung, eine Detektionseinrichtung zum Detektieren einer Durchlaufzeit eines Behältnisbereiches durch den Detektionsbereich, und eine Auswerteeinrichtung zum Ermitteln zumindest einer äußeren Geometrie des Behältnisses basierend auf der Durchlaufzeit aufweist.

Vorteilhaft ist die Vorrichtung zur Ermittlung der Geometrie die gleiche Vorrichtung, welche zu einer Ermittlung einer physikalischen, chemischen und/oder biologischen Eigenschaft eines innerhalb des Behältnisses eingebrachten fließfähigen und insbesondere flüssigen Mediums verwendet wird. Es ist dabei denkbar mit der Vorrichtung eine zerstörungsfreie Prüfung des Stichprobenproduktes und insbesondere des Stichprobenbehältnisses durchzuführen. Es ist jedoch auch denkbar ist, dass zumindest aufgrund des Bewegens bzw. Schüttelns des Behältnisses beispielsweise derart viel Kohlenstoffdioxid aus dem fließfähigen Medium ausgetreten ist, dass eine hinreichende Produktqualität und Mindesthaltbarkeit des Produktes bzw. des fließfähigen Mediums nicht mehr gewährleistet werden kann, sodass das Probenbehältnis dem weiteren Vertrieb nicht mehr zur Verfügung steht. Auch ist es denkbar, dass noch vor dem Prozess des Ermittelns einer Eigenschaft des fließfähigen Mediums und eventuell auch noch vor dem Prozess des Messens bzw. Ermittelns einer Geometrie des Behältnisses insbesondere ein Verschlusselement des Behältnisses mittels eines Anstichelementes bzw. eines Anstichdorns durchstochen wird, um vorzugsweise das oberhalb des flüssigen Mediums im Kopfraum des Behältnisses befindliche gasförmige Medium, welches vornehmlich ein Luft-Kohlenstoffdioxid-Gemisch ist, aus dem Behältnis auszulassen bzw. heraus zu fördern. Dies wird beispielsweise deshalb durchgeführt, um nach einem Schüttelprozess des Behältnisses, bei welchem das Behältnis bewegt, bzw. gedreht bzw. gekippt wird, der nun luft- bzw. gasleere Kopfraum bzw. Kopfbereich des Behältnisses lediglich mit einem aus dem flüssigen Medium austretenden Gas, wie dem Kohlenstoffdioxid gefüllt werden kann. Dies führt zu eindeutigen und vorteilhaft unverfälschten Messergebnissen bei der Ermittlung der Kohlenstoffdioxidkonzentration im flüssigen bzw. fließfähigen Medium.

Im Rahmen der Erfindung ist es denkbar, dass die Vorrichtung eine Berechnungseinrichtung zur Berechnung der inneren Geometrie aus einem Wert der äußeren Geometrie und einem Wert einer Wandstärke des Behältnisses aufweist. Die Berechnungseinrichtung kann dabei in der Vorrichtung selbst als separater Bestandteil integriert, oder ein Bestandteil der Detektionsvorrichtung oder auch eine extern angeordneter Einrichtung sein, welche mit der Vorrichtung zumindest datenübertragungstechnisch via Kabel oder kabellos via Bluetooth oder Wireless-LAN verbunden ist. Vorteilhaft weist die Vorrichtung zudem eine Sendeeinrichtung, eine Empfangseinrichtung bzw. eine kombinierte Send- und Empfangseinrichtung, eine Speichereinrichtung, eine Anzeigeeinrichtung und/oder eine Eingabeeinrichtung auf. Sofern die Anzeigeeinrichtung als berührungssensitiver Bildschirm ausgestaltet ist, kann diese gleichzeitig auch als Eingabeeinrichtung dienen. Mittels der Eingabeeinrichtung können beispielsweise Daten hinsichtlich des innerhalb des Behältnisses befindlichen Mediums eingegeben werden, welche insbesondere zur Ermittlung der Eigenschaft dieses Mediums erforderlich sind. Diese Werte könnten jedoch auch über eine Scan-Einheit der Vorrichtung zumindest mittelbar über einen entsprechenden Code, wie einen Strichcode, einen QR-Code einen Farbcode oder einem vergleichbaren Code eingelesen werden. Der entsprechende Code kann dabei an dem zu untersuchenden bzw. zu vermessenden Probenbehältnis bzw. Behältnis direkt angeordnet sein und/oder sich an einer Großverpackung bzw. einem Gebinde zum Verpackung einer Charge des Produktes befinden. Vorteilhaft ist die Scan-Einheit als zur Vorrichtung gehörendes externes Gerät ausgestaltet, welches kabellos oder via Kabel datenübertragungstechnisch mit der Vorrichtung verbunden ist. In der Speichereinheit können ermittelte sowie eingegebene Werte und Daten zumindest zeitweise und vorzugsweise langfristig gespeichert werden. Die Sende- und Empfangseinheit dient vorteilhaft dazu Daten beispielsweise über das zu untersuchende Behältnis und/oder das zu untersuchende Medium von zum Beispiel einem externen Computer oder Server zu empfangen und wiederum Daten bzw. Werte hinsichtlich der ermittelten Geometrie des Behältnisses und/oder der ermittelten Eigenschaft des Mediums an einen externen Computer oder Server etc. zu versenden.

Es ist des Weiteren denkbar, dass die Strahlungsquelle der Strahlungseinrichtung gleichzeitig die Strahlungssenke ist, sodass beide Einheiten der Strahlungseinrichtung an ein und derselben Seite der Vorrichtung angeordnet sind. Dabei strahlt die Strahlungsquelle einen elektromagnetischen Strahl bzw. elektromagnetische Wellen aus, welche an einer Wandung des Behältnisses zumindest teilweise absorbiert und teilweise zur Strahlungsquelle, welche nun gleichzeitig auch die Strahlungssenke zum Empfangen der Strahlung ist, zurück reflektiert wird. Die Strahlung, welche die Wandung des Behältnisses durchläuft, und von dieser zumindest teilweise gebrochen wird, trifft dann auf ein Reflexionselement, wie einem Spiegel, der gegenüberliegend im Strahlungsverlauf zur Strahlungsquelle und Strahlungssenke in der Vorrichtung angeordnet ist. Dieses Reflexionselement reflektiert dann die Strahlung wieder zurück, wobei die Strahlung wiederum durch die Wandungen des Behältnisses wandern kann.

Vorteilhaft ist es möglich, dass die Strahlungsquelle der Strahlungseinrichtung ein Laser zur Aussendung zumindest eines Laserstrahles und/oder die Strahlungssenke der Strahlungseinrichtung ein Fotodetektor zum Empfangen des Laserstrahles ist. Des Weiteren ist es denkbar, dass nicht nur ein Strahl und insbesondere Laserstrahl, sondern eine Mehrzahl an Laserstrahlen ausgehend von der Strahlungsquelle ausgesandt werden, wobei die Strahlen im Wesentlichen parallel zueinander verlaufen und vorteilhaft einen dreidimensionalen Raum, zumindest jedoch eine zweidimensionale Ebene z. B. über die Höhe aufspannen.

Im Rahmen der Erfindung dient die Strahlungseinrichtung zur Ermittlung einer Geometrie des Behältnisses ebenso, wie oben bereits beschrieben, zur Ermittlung einer physikalischen, chemischen und/oder biologischen Eigenschaft des fließfähigen Mediums, und insbesondere zu Ermittlung des Kohlenstoffdioxidgehaltes des Mediums. Dabei dient auch die Bewegungseinrichtung, mit welcher zumindest ein Bereich bzw. Abschnitt des Behältnisses durch den Detektionsbereich bewegt wird, vorteilhaft auch zur Realisierung des Rüttelvorgangs des Behältnisses bzw. des Durchmischungsvorganges der innerhalb des Mediums befindlichen Medien, nämlich dem fließfähigem Medium und dem gasförmigen Medium.

Es ist zudem denkbar, dass die Vorrichtung eine Aufnahmeeinrichtung wenigstens zum zumindest teilweisen Aufnehmen des Behältnisses aufweist. Diese Aufnahmevorrichtung kann dabei in Form eines Aufnahmebehälters bzw. -körpers ausgestaltet sein, in welchen das Behältnis zumindest teilweise eingebracht wird. Folglich ist es möglich, dass die Aufnahmeeinrichtung aus einem transparenten Material, wie beispielsweise einem Kunststoffmaterial besteht oder zumindest ein transparentes Sichtfenster aufweist. Insbesondere eine Aufnahmeeinrichtung aufweisend ein Kunststoffmaterial ist kostengünstig in der Herstellung, pflegeleicht und weist ein geringes Gewicht auf. Insbesondere das Gewicht ist relevant im Hinblick auf eine beabsichtigte Bewegung des Behältnisses zur Realisierung des Einstellens eines Phasengleichgewichtszustandes der Medien innerhalb des Behältnisses. So ist es denkbar, dass eine Antriebseinheit an der Aufnahmeeinrichtung selbst angeordnet ist, um die Aufnahmeeinrichtung gemeinsam mit dem darin angeordneten Behältnis zu bewegen bzw. zu drehen oder zu schütteln. Es ist des Weiteren denkbar, dass das Behältnis gemeinsam mit einem Einsatzelement in einen Bereich der Aufnahmeeinrichtung eingebracht wird. Das Einsatzelement dient dabei vorteilhaft dazu das Behältnis innerhalb der Aufnahmeeinrichtung und folglich innerhalb der Vorrichtung anzuordnen, insbesondere mittig auszurichten, das heißt zu zentrieren und vorteilhaft in der Höhe innerhalb der Vorrichtung zu justieren bzw. auszurichten. Es ist des Weiteren denkbar, dass die Aufnahmeeinrichtung nicht nur um eine definierte Drehachse bzw. einen definierten Drehpunkt gedreht bzw. gekippt werden kann, um das Behältnis zumindest zweitweise in eine Position kopfüber zu bewegen, wobei sich die Drehachse vorteilhaft senkrecht zu einer Längsachse des aufrecht stehenden Behältnisses und demnach auch zu einer Längsachse der sich in einer Ausgangsposition befindlichen Aufnahmeeinrichtung erstreckt. Vielmehr ist es auch möglich, dass die Aufnahmeeinrichtung sich um eine im Wesentlichen vertikal und damit parallel zu einer Längsachse des Behältnisses (im aufrechtstehenden Zustand) erstreckende Drehachse bewegt bzw. dreht. Dadurch ist es möglich das Behältnis um seine Längsachse zu drehen, insbesondere während der Bestimmung bzw. Ermittlung einer Eigenschaft des fließfähigen Mediums.

Vorteilhaft dient die Vorrichtung zur Ausführung des zuvor beschriebenen Verfahrens.

Bei der beschriebenen Vorrichtung ergeben sich sämtliche Vorteile, die bereits zu dem Verfahren zur Ermittlung einer Geometrie eines Behältnisses zur Verpackung eines fließfähigen Mediums beschrieben worden sind.

Eine erfindungsgemäße Vorrichtung wird nachfolgend anhand von Zeichnungen näher erläutert. Es zeigen jeweils schematisch:
- Figur 1: eine Seitenansicht einer Vorrichtung zum Ermitteln einer Geometrie eines Behältnisses mit einem Anstichdorn,
- Figur 2: eine Seitenansicht einer Vorrichtung zum Ermitteln einer Geometrie eines Behältnisses ohne einen Anstichdorn,
- Figur 3: eine Drehbewegung eines Behältnisses zum Ermitteln der Geometrie des Behältnisses innerhalb einer erfindungsgemäßen Vorrichtung, und
- Figur 4: beispielhaftes Messdiagramm zur Bestimmung der Geometrie eines Behältnisses nach dem erfindungsgemäßen Verfahren.

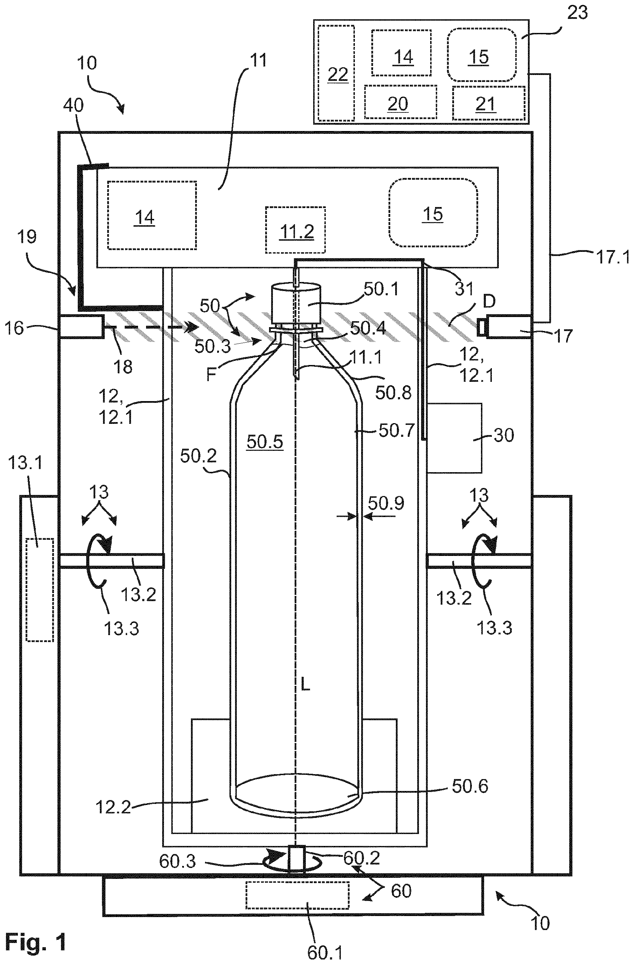

Elemente und technische Merkmale mit gleicher Funktion und Wirkungsweise sind in den Fig. 1 bis 4 jeweils mit denselben Bezugszeichen versehen.

In Fig. 1 ist schematisch eine Seitenansicht einer Vorrichtung 10 zum Ermitteln einer Geometrie eines Behältnisses 50 mit einem Anstichdorn 11.1 gezeigt. Das Behältnis 50 ist vorteilhaft mit einem fließfähigen Medium 50.5 befüllt, wobei die Befüllung des Mediums beispielsweise an einer Befüllstation stattfindet. Das in das verschließbare Behältnisses 50 eingebrachte flüssige bzw. fließfähige Mediums 50.5 ist vorzugsweise ein (trinkbares) Lebensmitteln und bevorzugt ein Getränk. Die Vorrichtung 10 weist eine mechanische Aufnahmevorrichtung 12 bzw. einen mechanischen Aufnahmebehälter 12 zur Aufnahme und Anordnung des Behältnisses 50 an bzw. in der Vorrichtung 10 auf. Bei dem zu untersuchenden Behältnis 50 bzw. bei dem Behältnis 50, welches das zu untersuchende fließfähige Medium 50.5 beinhaltet, handelt es sich insbesondere um einen Flüssigkeitsbehälter in Form einer Flasche, welche einen Mündungsbereich 50.3 bzw. einen Halsbereich 50.3 bzw. ein Kopfbereich 50.3 bzw. einen Kopfraum 50.3 sowie einen Körperbereich 50.2 und einen Bodenbereich 50.6 aufweist. Vorteilhaft ist ein Bestandteil des Behältnisses 50 das Verschlusselement 50.1, welches beispielsweise ein Schraubverschlussdeckel, ein Kronkorkendeckel oder ein Korkstopfen oder ein vergleichbarer Deckel ist. Ein Füllstand F des flüssigen Mediums 50.5 in dem Behältnis 50 ist ebenfalls schematisch angedeutet. Vorteilhaft ist das Behältnis 50 bis zu einem Halsbereich 50.3 bzw. bis in diesen Halsbereich 50.3 hinein mit dem flüssigen Medium 50.5 befüllt. Oberhalb des Füllstandes F befindet sich im Kopfraum 50.3, welcher üblicherweise nicht mit dem flüssigen Medium 50.5 befüllt ist, ein gasförmiges Medium 50.4, welches üblicherweise Kohlenstoffdioxid- (CO₂) haltig ist. Damit dieses Gas 50.4 im Kopfraum 50.3 nicht entweichen kann, ist das Behältnis 50 bzw. der Körperbereich 50.2 des Behältnisses 50 mit dem Verschlusselement 50.1 verschlossen.

Wie ferner aus der Fig. 1 hervorgeht, ist das Behältnis 50 durch ein Anstechmittel 11.1 bzw. einen Anstichdorn 11.1 angestochen und insbesondere in einem Bereich, vornehmlich in dem Bereich des Verschlusselementes 50.1 durchstochen wurden. Der Anstichdorn 11.1 kann dabei durch eine Wandung des Verschlusselementes 50.1 bis in das flüssige Medium 50.5 hineinragen. Im Rahmen der Erfindung ist es jedoch ausreichend, wenn der Anstichdorn 11.1 durch das Verschlusselement 50.1 bis in den Kopfraum 50.3 des Behältnisses 50 geführt wird bzw. hineinragt und folglich bei einem aufrechten Stehen des Behältnisses 50 auf dessen Behältnisboden 50.6 das flüssige Medium 50.5 nicht kontaktiert. Der Anstichdorn 11.1 ist vorteilhaft selbst ein Bestandteil einer Messkopfeinrichtung 11, welche. In vertikaler Richtung betrachtet, oberhalb des Verschlusselementes 50.1 angeordnet ist. Dabei kann die Messkopfeinrichtung 11 auch zum Abdichten des Verschlusselementes 50.1 beim Anstechen dieses Verschlusselementes 50.1 mittels dem Anstichdorn 11.1 dienen, was im vorliegenden Fall jedoch nicht aus der Fig. 1 - zum besseren Verständnis der Erfindung - hervorgeht. In der Messkopfeinrichtung 11, welche vornehmlich als ein Bestandteil der erfindungsgemäßen Vorrichtung 10 zugeordnet sein kann, kann zumindest eine Messeinheit 11.2 und insbesondere ein Sensor 11.2 angeordnet sein. Bei dieser Messeinheit 11.2 kann es sich insbesondere um eine Temperaturmesseinheit bzw. einen Temperatursensor handeln. Auch können mehrere Messeinheiten 11.2 in der Messkopfeinrichtung 11 vorgesehen sein, die ebenfalls die Eigenschaften des flüssigen Mediums 50.5 und/oder des gasförmigen Mediums 50.4 durch den Anstichdorn 11.1 direkt messtechnisch erfassen können.

Des Weiteren ist die Vorrichtung 10 mit einer (ersten) Bewegungseinrichtung 13 und insbesondere einer Dreh- und oder Schwenkeinrichtung 13 bzw. einem Dreh- und Schwenkmechanismus 13 ausgestattet. Vorteilhaft weist die Bewegungseinrichtung 13 ein bügelartiges Element 12.1 bzw. einen Bügel 12.1 auf, der dazu dient entweder das Behältnis 50 sicher in die Vorrichtung 1 aufzunehmen und dieses Behältnis an der Bewegungsreinrichtung 13 anzuordnen, oder die Aufnahmeeinrichtung 12, welche das Behältnis 50 zumindest teilweise aufnehmen kann, an der Bewegungseinrichtung 13 anzuordnen und mit dieser zu verbinden. Am unteren, distalen Ende der Aufnahmeeinrichtung 12 kann ein Einsatzelement 12.2 angeordnet sein, welches neben der Zentrierung und Höhenjustierung des Behältnisses 50 innerhalb der Aufnahmeeinrichtung 12 und folglich in der Vorrichtung 10 ebenfalls zur formschlüssigen und/oder kraftschlüssigen Halterung des Behältnisses 50 dient. Vorteilhaft kann folglich mittels der Aufnahmeeinrichtung 12 und insbesondere dessen Einsatzelement 12.2 das Behältnis 50 geometrisch exakt, das heißt zentriert und höhenjustiert innerhalb der Vorrichtung 10 justiert bzw. angeordnet werden.

Die Messkopfeinrichtung 11, welche vorteilhaft ebenfalls über ein Spannelement 40 mit der der Aufnahmeeinrichtung 12 und insbesondere mit dem Bügel 12.1 und folglich mit der Bewegungseinrichtung 13 verbunden ist, kann zusätzlich über eine Auswerteeinheit 14 sowie eine Anzeigeeinheit 15 verfügen. Es ist jedoch auch denkbar, dass die Messkopfeinrichtung 11 mit einer Bestimmungseinrichtung 30 datenübertragungstechnisch verbunden ist, wobei die Bestimmungseinrichtung 30 neben der Auswerteeinheit 14 und der Anzeigeeinheit 15 auch eine Speichereinheit 20 zum Speichern eingegebener und/oder ermittelter Daten und Werte, wie gemessene Druckwerte und/oder Temperaturwerte, sowie eine Sende-und Empfangseinheit 21 zum Empfangen von gemessenen Werten (Druck/Temperatur) von beispielsweise der Messkopfeinrichtung 11 sowie zum Versenden von über eine Eingabeeinheit 22 eingegebener Werte, wie beispielsweise Daten über die Art oder Zusammensetzung des zu untersuchenden fließfähigen Mediums 50.5, die Art des Behältnisses 50 (Glasmaterial, Kunststoffmaterial etc.) aufweist. Es ist zudem möglich, dass die Anzeigeeinheit 15 ein berührungssensitiver Bildschirm (Touchscreen) ist, über welchen folglich auch Daten bzw. Werte eingegebene werden können, sodass die Anzeigeeinheit 15 auch gleichzeitig eine Eingabeeinheit 22 darstellen kann und auf eine separate Eingabeeinheit 22 verzichtet werden könnte. Die Datenübertragung zwischen der Messkopfeinrichtung 11 und der Bestimmungseinrichtung 30 kann kabelgebunden oder kabellos über beispielsweise Bluetooth oder Wireless-Lan erfolgen. Es ist auch denkbar, dass die Bestimmungseinrichtung 30 mit den entsprechenden Einheiten 14, 15, 20, 21 und/oder 22 in der Messkopfeinrichtung 11 integriert ist und folglich einen Bestandteil der Messkopfeinrichtung 11 darstellt. Vorteilhaft ist die Bestimmungseinrichtung 30 stationär an der Vorrichtung 10 angeordnet und bewegt sich folglich nicht, wie dagegen die Messkopfeinrichtung 11, mit der Aufnahmeeinrichtung 12 und dem darin angeordneten Behältnis 50 um einen definierten Drehpunkt bzw. eine definierte Drehachse 13.2, zumindest zeitweise in eine definierte Drehrichtung 13.3.

Es ist zudem denkbar, dass der Bügel 12.1 nicht nur an einer Aufnahmeeinrichtung 12, welche vornehmlich als zumindest teilweise geschlossenes Gehäuse, aufweisend eine Eingabeöffnung, insbesondere in Form eines Zylinders ausgestaltet ist, angeordnet ist, und diese Aufnahmeeinrichtung 12 zumindest bereichsweise umgibt. Vielmehr kann der Bügel 12.1 auch selbst als Aufnahmemittel dienen und folglich die Aufnahmeeinrichtung 12 weitestgehend ersetzten, sodass das Einsatzelement 12.2 vorteilhaft direkt an dem Bügel 12.1 und insbesondere an dessen unterem, distalen Ende angeordnet ist, um das Behältnis 50 zu positionieren, zu justieren und zu zentrieren. Es ist des Weiteren denkbar, dass innerhalb der Aufnahmeeinrichtung 12 zum Beispiel eine zuvor beschriebene, jedoch hier nicht dargestellte, Temperiereinheit angeordnet ist, welche zur Temperierung des fließfähigen Mediums 50.5 dienen kann, um die Einstellung eines Phasengleichgewichtszustandes innerhalb des Behältnisses 50 beschleunigen zu können.

Des Weiteren kann innerhalb der Vorrichtung 10, insbesondere im Bereich bzw. in Höhe des Kopfraumes 50.3 des Behältnisses 50 zumindest eine Strahlungsvorrichtung 19 angeordnet sein. Die Strahlungseinrichtung 19 weist vorteilhaft eine Strahlungsquelle 17, beispielsweise in Form eines Lasers, sowie eine Strahlungssenke 17, beispielsweise in Form eines Detektors, insbesondere eines Fotodetektors, auf. Ausgehend von der Strahlungsquelle 16 wird eine elektromagnetische Strahlung 18, wie beispielsweise eine Infrarotstrahlung bzw. elektromagnetische Wellen, entlang eines Detektionsbereiches D durch zumindest einen Bereich des Behältnisses 50 und insbesondere einen Kopfbereich 50.3 des Behältnisses 50 zu der Strahlungssenke 17 gesandt.

Insbesondere ist die Strahlungsquelle 16 derart ausgerichtet, dass die ausgesandte Strahlung 18 bzw. die ausgesandten elektromagnetischen Wellen 18 im Wesentlichen senkrecht auf eine Längsachse L des Behältnisses 50 treffen. Die an einer der Strahlungsquelle 16 gegenüberliegenden Seite des Behältnisses 50 angeordnete Strahlungssenke, welcher auch als optischer Sensor 17 bezeichnet werden kann, kann die ausgesandte Strahlung 18 messtechnisch erfassen. Auch kann an der Strahlungsquelle 16 selbst eine Strahlungssenke 17 bzw. ein optischer Sensor vorgesehen sein, der einen Teil einer reflektierten Strahlung 18 misst. Durch die vorgesehene Strahlungsquelle 16 sowie die Strahlungssenke 17 lässt sich eine zerstörungsfreie Probenmessung hinsichtlich einer Eigenschaft des fließfähigen Mediums 50.5 und insbesondere eine einfache, kostengünstige, schnelle und prozesssichere Ermittlung der Geometrie des Behältnisses 50 vornehmen. Vorteilhaft ist die ausgesandte Strahlung 18 nicht auf das für den Menschen sichtbare Licht beschränkt, sodass auch Strahlungen 18 einer anderen Wellenlänge denkbar sind.

Mit dem Bezugszeichen 40 ist schematisch ein Spannelement dargestellt, welches sich von einer Außenseite der Aufnahmevorrichtung 12 bis zu einem Bereich der Messkopfeinrichtung 11 erstreckt und folglich die Messkopfeinrichtung 11 mit der Aufnahmevorrichtung 12 vorzugsweise fest verbindet. Vorteilhaft wird mithilfe des Spannelementes 40 ein Anordnen und/oder Arretieren der Messkopfeinrichtung 11 auf einer Öffnung des Aufnahmebehälters 50 und/oder einem oberen Bereich, insbesondere dem Mündungsbereich 50.3 und vorzugsweise dem Bereich, an welchem das Verschlusselement 50.1 angeordnet ist, des Behältnisses 50 ermöglicht. Demnach dient das Spannelement 40 vorteilhaft zum Arretieren der Messkopfeinrichtung 11 auf der Öffnung des Aufnahmebehälters 50 und folglich zum Einspannen des Behältnisses 50 in der Aufnahmeeinrichtung 12, das heißt zwischen der Aufnahmeeinrichtung 12 und der Messkopfeinrichtung 11 selbst.

Insbesondere um eine optimale Probenvorbereitung und vornehmlich die Einstellung eines Phasengleichgewichtszustandes innerhalb des Behältnisses 50 zu erreichen, ist die Vorrichtung 10 mit der bereits erwähnten Bewegungseinrichtung 13 bzw. dem Dreh- und/oder Schwenkmechanismus 13 ausgestattet. Diese kann durch einen elektromechanischen Antrieb 13.1 angetrieben werden, welcher beispielsweise durch einen Elektromotor (E-Motor) realisiert werden kann. Der Dreh- und oder Schwenkmechanismus 13 dreht dabei den Bügel 12.1 und/oder die Aufnahmevorrichtung 12 mit dem daran bzw. darin fixierten Behältnis 50 und der an der Aufnahmevorrichtung 12 angeordneten Messkopfeinrichtung 11. Auch ist es denkbar, dass zumindest eine Strahlungsquelle 16 und/oder eine Strahlungssenke 17 an der Aufnahmevorrichtung 12 angeordnet und nicht stationär mit der Vorrichtung 10 verbunden ist/sind, wie in der Figur 1 beispielhaft dargestellt.

Des Weiteren ist in der Fig.1 eine Entnahmeeinheit 30 gezeigt, welche auch als "Snift-Sammler" bezeichnet wird. Die Entnahmeeinheit 30 ist vornehmlich in einem Bereich der Aufnahmevorrichtung 12 und/oder des Bügels 12.1 angeordnet und kann sich folglich mit diesen Bauteilen mitbewegen bzw. um die Drehachse 19 mitdrehen. Es ist jedoch auch denkbar, dass die Entnahmeeinheit 30 stationär innerhalb der Vorrichtung 10 angeordnet ist und lediglich über entsprechende Verbindungselemente mit der Aufnahmevorrichtung 12 bzw. dem Bügel 12.1 verbunden ist. In beiden Ausgestaltungsformen führt ein Leitungselement 31 zum Leiten insbesondere eines gasförmigen Mediums 50.4 von der Entnahmeeinheit 30 bis zu dem Anstichdorn 11.1, welcher insbesondere an dessen distalen E, welches sich bis in das Innere des Behältnisses 50 hinein erstreckt, spitz ausgestaltet ist. Über den Anstichdorn 11.1 kann nun mit Hilfe der Entnahmeeinheit 30 ein gasförmiges Medium 50.4, wie beispielsweise Luft oder auch ein Luft-Kohlendioxid-Gemisch insbesondere aus dem Kopfraum 50.3 des Behältnisses 50 abgeführt werden. Dieses gasförmige Gemisch 50.4 kann dabei an einen extern angeordneten Behälter (hier nicht gezeigt) oder auch an die Umgebung abgeleitet werden. Vorteilhaft wird das gasförmige Gemisch 50.4 noch vor dem Beginn der Probenmessung und/oder vor Beginn einer Ermittlung der Geometrie des Behältnisses 50 und vorzugsweise auch vor Beginn einer Bewegung des Behältnisses 50 zur Durchmischung der Medien und Einstellung des Phasengleichgewichtszustandes innerhalb des Behältnisses 50 entnommen, um vorzugsweise insbesondere in dem Behältnis 50 befindliche Lust auslassen zu können.

Des Weiteren ist in der Fig.1 eine weitere (zweite) Bewegungseinrichtung 60 gezeigt, welche ebenfalls über einen elektromechanischen Antrieb 60.1, wie einen Elektromotor 60.1 angetrieben werden kann. Hierbei wird eine Welle 60.2 derart in eine Drehrichtung 60.3 angetrieben, dass insbesondere der Bügel 12.1 und/oder die Aufnahmeeinrichtung 12, welche auch mit der zweiten bzw. weiteren Bewegungseinrichtung 60 wirkverbunden ist/sind, in die Drehrichtung 60.2 bewegt werden kann. Folglich dreht sich das Behältnis 50 um dessen eigene Längsachse L, welche sich vom Kopfbereich 50.3 bis zum Bodenbereich 50.6 des Behältnisses 50 erstreckt. Eine Messung der Geometrie des Behältnisses 50 an unterschiedlichen Messpunkten, genauso wie eine Ermittlung der Eigenschaft des fließfähigen Mediums 50.5 durch eine Ermittlung des Druckes des gasförmigen Mediums 50.4 an unterschiedlichen Messpunkten erhöht die Messgenauigkeit und verringert Messfehler, wodurch genaue und detaillierte Messergebnisse geliefert werden können.

Mit dem Bezugszeichen 50.9 ist eine Wandstärke des Behältnisses 50 dargestellt, welche beispielsweise als vorgegebener Wert innerhalb einer Speichereinheit 20 hinterlegt sein kann oder über eine weitere Messeinrichtung, wie eine weitere Strahlungseinrichtung, welche hier jedoch nicht aufgezeigt ist, ermittelt werden kann. Gemäß der vorliegenden Erfindung wird mittels der Strahlungseinrichtung 19 und der durch die Strahlungseinrichtung 19 ausgesandte Strahlung 18 neben einer physikalischen, chemischen und/oder biologischen Eigenschaft des fließfähigen Mediums 50.5 auch die Geometrie und insbesondere eine Außenkontur bzw. Außengeometrie 50.8 bzw. eine äußere Geometrie 50.8 des Behältnisses 50 aufgrund der erfassten Reflexion, Absorbtion und/oder Brechung der Strahlung 18 an der Behältniswandung des Behältnisses 50 ermittelt. Diese Werte können dann der Berechnungseinrichtung 23 über beispielsweise eine Übertragungsleitung 17.1, welche kabelgebunden oder auch kabellos ausgeführt sein kann, übermittelt werden. Die Berechnungseinrichtung 23 ist vorteilhaft gleichzeitig auch die Bestimmungseinrichtung 23, welche zum Bestimmen eines physikalischen, chemischen und/oder biologischen Eigenschaftswertes des fließfähigen Mediums 50.5 verwendet wird. Vornehmlich kann die Auswerteeinheit 14 der Berechnungseinrichtung 23 aus dem erhaltenen Wert bzw. Datum über die Außenkontur 50.8 sowie dem bekannten oder gegebenenfalls ermittelten Wert bzw. Datum über die Wandstärke 50.9 einen Wert über die Innenkontur 50.7 bzw. die Innengeometrie 50.7 bzw. die innere Geometrie 50.7 des Behältnisses 50 berechnen.

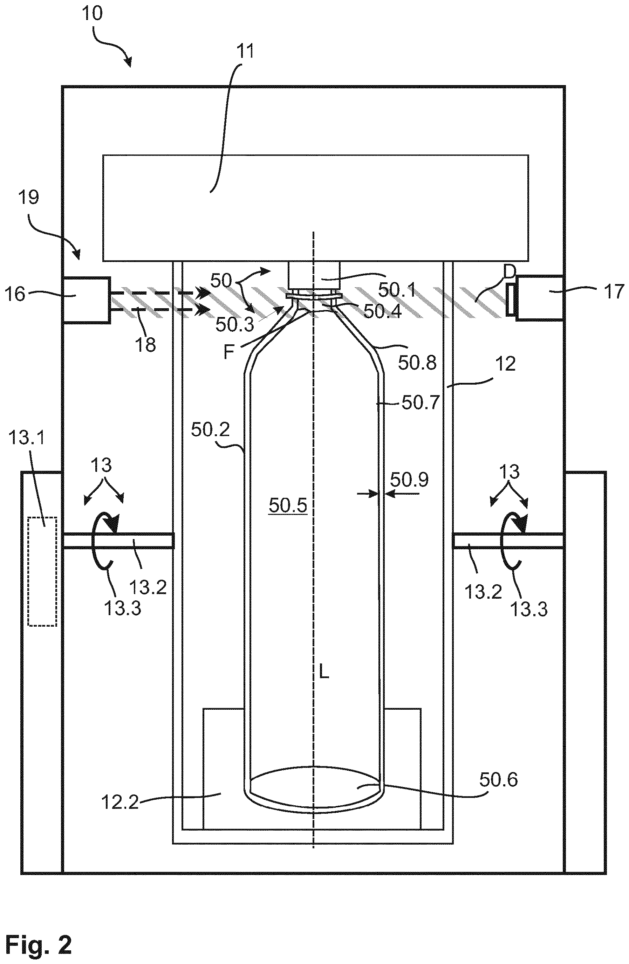

In der Fig. 2 ist schematisch eine Seitenansicht einer Vorrichtung 10 zum Ermitteln einer Geometrie eines Behältnisses 50 ohne einen Anstichdorn dargestellt. Zum einfachen Verständnis wurden in Fig. 2 lediglich einzelne Bauteile und Elemente bzw. Einrichtungen und Einheiten der erfindungsgemäßen Vorrichtung 10, wie beispielsweise in Fig. 1 dargestellt, aufgezeigt. Es ist jedoch angemerkt, dass alle in der Fig.1 gezeigten Bauteile auch in der Vorrichtung 10 gemäß der Fig. 2 integriert sein können. Es soll im Unterschied zur Vorrichtung 10 der Fig. 1 lediglich aufgezeigt werden, dass die Vorrichtung 10 auch ohne einen Anstichdorn 11.1 (vgl. Fig. 1) aufgebaut sein kann. Auch in diesem Fall ist es denkbar, dass die Messkopfeinrichtung 11 zumindest das Verschlusselement 50.1 des Behältnisses 50 direkt kontaktiert, wobei mittels hier nicht gezeigter Arretierungselemente der Bereich des Verschlusselementes 50.1 derart von der Messkopfeinrichtung 11 aufgenommen werden kann, das bei einer Drehbewegung bzw. Rüttelbewegung des Behältnisses 50 zur Probenvorbereitung das Behältnis 50 innerhalb der Vorrichtung 10 nicht verrutschen kann.

Des Weiteren ist in der Fig. 2 schematisch aufgezeigt, dass die Strahlungseinrichtung 19 und insbesondere deren Strahlungsquelle 16 auch eine Mehrzahl an Strahlungen 18 aussenden kann, wobei die Strahlungen 18 vorteilhaft im Wesentlichen parallel beabstandet zueinander durch den Detektionsbereich D verlaufen. Vorzugsweise ist die Strahlungsquelle 16 ein Linienlaser, welcher eine Mehrzahl an Linienlaserstrahlen, dann auch Zeilenlaser genannt, aussenden kann, wobei auch die Strahlungssenke 17 folglich als eine Art Zeilensensor ausgestaltet ist, um eine Mehrzahl von Strahlungen bzw. Linienlaserstrahlen aufnehmen zu können.

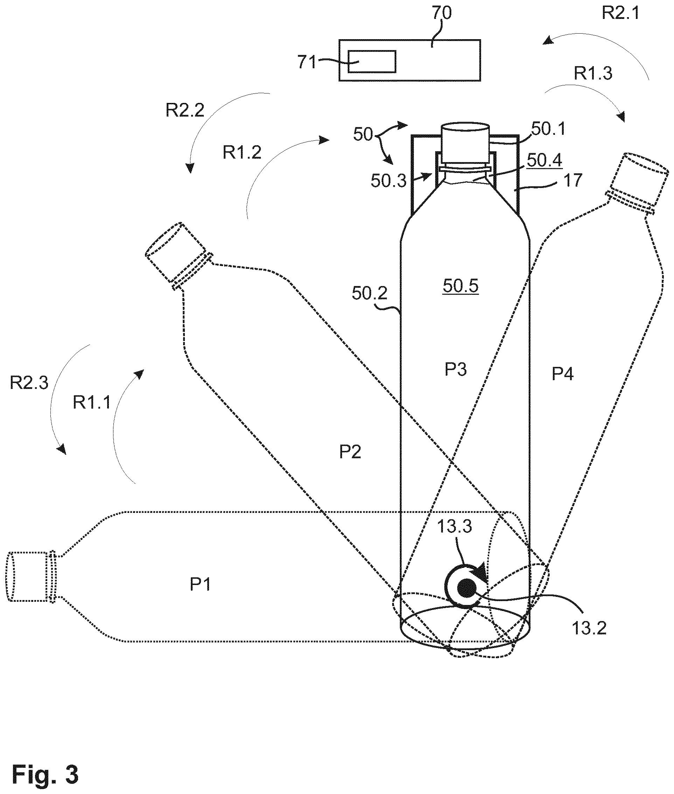

Die Fig. 3 zeigt schematisch eine Drehbewegung eines Behältnisses 50 zum Ermitteln der Geometrie des Behältnisses 50 innerhalb einer erfindungsgemäßen Vorrichtung 10 (vgl. Figuren 1 oder 2). Hierbei schaut der Betrachter folglich aus der Richtung der Strahlungsquelle 16 (vgl. Fig. 1 oder Fig. 2), den ausgesandten Strahlen 18 (vgl. Fig. 1 oder Fig. 2) folgend, auf die Strahlungssenke 17 und die durch den Detektionsbereich D (vgl. Figuren 1 oder 2) verlaufenden Behältnisse 50 bzw. deren Behältnisbereiche. Um eine Eigenschaft des fließfähigen Mediums 50.5, wie beispielsweise dessen Kohlenstoffdioxidgehalt ermitteln zu können, ist es erforderlich die Probe vor der Messung bzw. Ermittlung der Eigenschaft entsprechend vorzubereiten. Dazu wird das mit dem fließfähigen Medium 50.5 befüllte und mit einem Verschlusselement 50.1 verschlossene Behältnis 50 mittels der in Fig. 1 oder Fig. 2 gezeigten Bewegungseinrichtung 13 um eine Drehachse 13.2 in eine Drehrichtung 13.2 bewegt, wodurch sich insbesondere das flüssige Medium 50.5 in dem Behältnis 50 derart bewegt, dass Kohlenstoffdioxid aus dem flüssigen Medium 50.5 abgegeben wird. Eine Bewegung des Behältnisses 50 findet vorteilhaft solange statt, bis sich ein Phasengleichgewichtszustand einstellt. Diese Bewegung um die Drehachse 13.2 wird auch genutzt, um eine Geometrie und insbesondere eine Außengeometrie 50.8 des Behältnisses 50 ermitteln zu können. Das um die Drehachse 13.2 zum Beispiel in eine erste Bewegungsrichtung R1.1 und R1.2 und R1.3 von einer ersten Position P1 in deine vierte Position P4 gedrehte Behältnis 50 passiert bzw. durchläuft dabei den Detektionsbereich D (vgl. Figuren 1 oder 2). Das bedeutet, dass bei einer Bewegung in einer ersten Bewegungsrichtung R1.2 von Position P2 oder P1 zu Position P3 ein Eintritt und bei einer Bewegung in einer ersten Bewegungsrichtung R1.3 von Position P3 zu Position P4 ein Austritt aus dem Detektionsbereich von einer entsprechenden Detektionseinrichtung 70, welche beispielsweise mit einer Strahlungssenke 17 kabellos oder via Kabel verbunden sein kann, detektiert werden kann. Die Detektionseinrichtung 70 und insbesondere eine Auswerteeinheit 71 der Detektionseinrichtung 70 misst die Zeit, die das Behältnis 50 bzw. insbesondere ein Kopfbereich 50.3 des Behältnisses 50 braucht, bis dieser Behältnisbereich bei einer definierten Drehbewegungsgeschwindigkeit den Detektionsbereich D durchlaufen hat. Die Auswerteeinheit 71 kann auch die Auswerteeinheit 14 der Bestimmungseinrichtung 23 sein, sodass es folglich denkbar ist, dass die Detektionseinrichtung 70 auch die Bestimmungseinrichtung 23 ist, wobei vorteilhaft eine zusätzliche Auswerteeinrichtung eingespart werden kann. Dies ist wiederum kosteneinsparen. Aus dem Zeitwert ermittelt die Auswerteeinheit 71 einen Wert "x" für eine Außenkontur bzw. eine Außengeometrie 50.8 des Behältnisses 50. Vorteilhaft bewegt sich das Behältnis 50 immer in eine Drehrichtung, wie mit den Pfeilen R1.1, R1.2 und R1.3 dargestellt. Dabei kann das Behältnis 50 permanent im Kreis gedreht werden, ohne in der Bewegung angehalten werden zu müssen. Es ist jedoch auch denkbar, dass das Behältnis immer nur um 180° oder weniger um dessen Drehachse 13.2 geschwenkt wird und nach einer Endposition wieder in eine andere der ersten Richtung entgegengesetzten Richtung, nämlich eine zweite Bewegungsrichtung, wie insbesondere mit den Pfeilen R2.1, R2.2 und R2.3 gezeigt, von beispielsweise einer Position P4 zu einer Position P2 oder P1 bewegt wird.

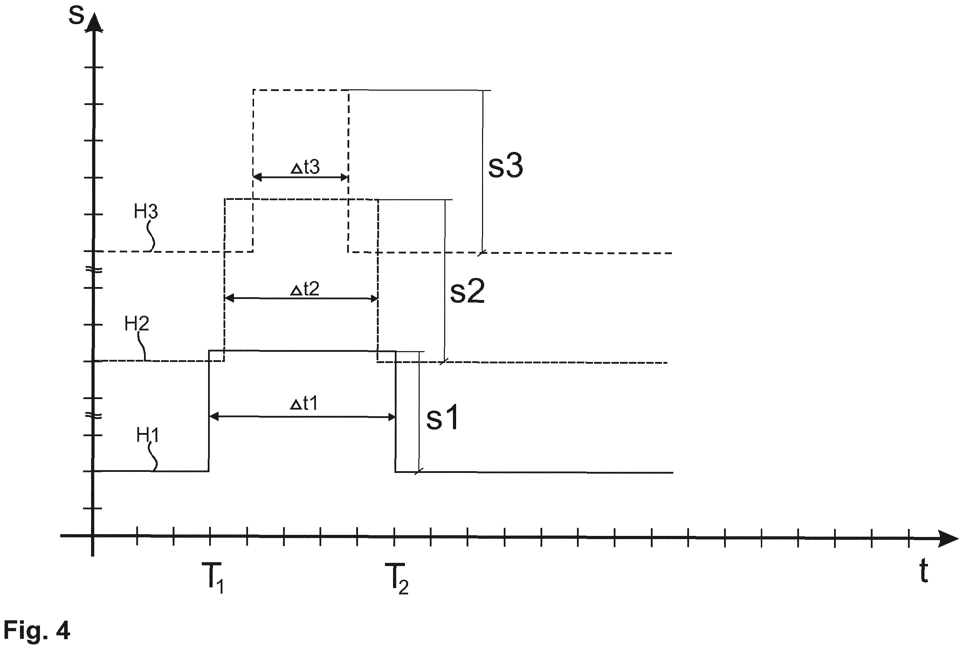

In der Fig. 4 ist ein Messdiagramm nach dem erfindungsgemäßen Verfahrens schematisch dargestellt. Dabei ist auf der x-Achse die Zeit t aufgetragen und auf der y-Achse das Messsignal s bzw. die beispielhafte Änderung des Messsignals s von der Strahlungseinrichtung 19, insbesondere Strahlungssenke 17. Zu besseren Verdeutlichung des Verfahrens sind drei unterschiedliche Messsignale s1 bis s3 vom Detektionsbereich auf den jeweiligen Höhen H1 bis H3 in einem Diagramm dargestellt.

Zunächst wird nur der Signalverlauf auf der Höhe H1, der als durchgehende Linie gezeigt ist, erläutert. Dabei wird das Behältnis 50 langsam mit einer konstanten Geschwindigkeit v zum Detektionsbereich auf der Höhe H1 bewegt. Zum Zeitpunkt T1 tritt nun das Behältnis 50 in den Detektionsbereich ein, wobei es zu einer deutlichen Signaländerung s1 kommt und dieser Zeitpunkt T1 gespeichert wird. Solange das Behältnis 50 in dem Detektionsbereich (auf der Höhe H1) weiter mit der konstanten Geschwindigkeit v bewegt wird, findet bei dieser Messung keine wesentliche Signaländerung statt. Erst wenn das Behältnis 50 aus dem Detektionsbereich (auf der Höhe H1) austritt, findet zum Zeitpunkt T2 wieder eine deutliche Signaländerung s1 statt. Auch dieser Zeitpunkt T2 wird erfasst und gespeichert. Aus der Differenz der beiden Zeitpunkte T1 und T2 lässt sich die Zeitspanne bzw. Zeit Δt1 bestimmen. Da ebenfalls die Bewegungsgeschwindigkeit v des Behältnis 50 bekannt ist, kann nun auch die Eintrittslänge L des Behältnis 50 in dem Detektionsbereich exakt durch das Produkt L= v * t bestimmen, die der Außengeometrie bzw. dem Außendurchmesser L des Behältnis 50 auf der Höhe H1 entspricht. Somit gelangt man zu dem gewünschten Messergebnis.

Die zuvor beschriebene Messung kann auf einer unterschiedlichen Höhe H2 oder H3 im Detektionsbereich wiederholt werden, wobei die beispielhaften Signalverläufe s2 und s3 gestrichelt übereinander in den Diagramm angedeutet sind. Aus diesen vergleichbaren Verläufen zur ersten Messung s1 ergibt sich, dass der Außendurchmesser L des Behältnis 50 über die Höhe H1 bis H3 abnimmt und somit schmaler wird, da die jeweilige Eintrittsdauer Δt1 bis Δt3 sich sichtbar bei gleichbleibender Geschwindigkeit v verkürzt.

Wie bereits erwähnt, kann die Messung s1 bis s3 auch mit einer zeilenförmigen Strahlungseinrichtung 19 oder drei Punktmessungen übereinander auf den Höhen H1 bis H3 simultan ablaufen.

### Bezuaszeichenliste

- 10: Vorrichtung
- 11: Messkopfeinrichtung
- 11.1: Anstichdorn
- 11.2: Messeinheit /Temperaturmesseinheit
- 12: Aufnahmevorrichtung
- 12.1: Bügel
- 12.2: Einsatzelement
- 13: Bewegungseinrichtung /Dreh- und Schwenkbewegungseinrichtung, -mechanismus
- 13.1: Antrieb
- 13.2: Drehachse/Drehwelle
- 13.3: Drehrichtung
- 14: Auswerteeinheit
- 15: Anzeigeeinheit

- 16: Strahlungsquelle
- 17: Strahlungssenke
- 17.1: Leitungselement
- 18: Strahlung/Wellen
- 19: Strahlungseinrichtung
- 20: Speichereinheit
- 21: Sende- und/oder Empfangseinheit
- 22: Eingabeeinheit
- 23: Bestimmungseinrichtung/Berechnungseinrichtung

- 40: Spannelement

- 50: Behältnis
- 50.1: Verschlusselement
- 50.2: Körperbereich
- 50.3: Halsbereich/Kopfraum
- 50.4: gasförmiges Medium
- 50.5: flüssiges Medium
- 50.6: Bodenbereich
- 50.7: innere Geometrie/Innengeometrie/Innenkontur
- 50.8: äußere Geometrie/Außengeometrie/Außenkontur

- 50.9: Wandstärke

- 60: weitere Bewegungseinrichtung
- 60.1: Antrieb
- 60.2: Drehachse/Drehwelle
- 60.3: Drehrichtung

- 70: Detektionseinrichtung
- 71: Auswerteeinheit

- D: Detektionsbereich
- L: Längsachse des Behältnisses

- P1: Position 1 des Behältnisses 50
- P2: Position 2 des Behältnisses 50
- P3: Position 3 des Behältnisses 50
- P4: Position 4 des Behältnisses 50

- R1.1: erste Bewegungsrichtung von Position P1 zu P2
- R1.2: erste Bewegungsrichtung von Position P2 zu P3
- R1.3: erste Bewegungsrichtung von Position P3 zu P4

- R2.1: zweite Bewegungsrichtung von Position P4 zu P3
- R2.2: zweite Bewegungsrichtung von Position P3 zu P2
- R2.3: zweite Bewegungsrichtung von Position P2 zu P1

## Patentansprüche

1. Verfahren zur Ermittlung einer Geometrie eines Behältnisses (50) zur Verpackung eines insbesondere fließfähigen Mediums (50.5), aufweisend die Schritte:
- Aktivieren einer Strahlungseinrichtung (19) zum Erzeugen und Aussenden zumindest elektromagnetischer Strahlung (18) von einer Strahlungsquelle (16) der Strahlungseinrichtung (19) entlang eines Detektionsbereiches (D) zu einer Strahlungssenke (17) der Strahlungseinrichtung (19);
- Drehen und/oder Schwenken des Behältnisses (50) mittels einer Bewegungseinrichtung (13) um eine Drehachse (13.2), wobei zumindest zeitweise während einer Drehbewegung des Behältnisses (50) wenigstens ein Behältnisbereich durch wenigstens einen Abschnitt des Detektionsbereiches (D) bewegt wird;
- Detektieren einer Durchlaufzeit des Behältnisbereiches durch den Detektionsbereich (D) mittels einer Detektionseinrichtung (70) und
- Ermitteln einer äußeren Geometrie (50.8) zumindest aus der Durchlaufzeit mittels einer Auswerteeinrichtung (71),
wobei ein und dieselbe Strahlungseinrichtung (19) auch zur optischen Messung einer zumindest physikalischen, chemischen oder biologischen Eigenschaft des fließfähigen Mediums (50.5) dient.

2. Verfahren gemäß Anspruch 1,
**dadurch gekennzeichnet, dass**
eine inneren Geometrie (50.7) des Behältnisses (50) aus einem Wert der äußeren Geometrie (50.8) und einem Wert einer Wandstärke (50.9) des Behältnisses (50) ermittelt wird

3. Verfahren gemäß einem der vorangegangenen Ansprüche,
**dadurch gekennzeichnet, dass**
zumindest ein Wert der Wandstärke (50.9) des Behältnisses (50) mittels der Strahlungseinrichtung (19) und/oder mittels einer weiteren Strahlungseinrichtung ermittelt wird.

4. Verfahren gemäß einem der vorangegangenen Ansprüche,
**dadurch gekennzeichnet, dass**
die Strahlungseinrichtung (19) zeitlich während und/oder zeitlich nachfolgend der Ermittlung der Geometrie des Behältnisses zu einer Ermittlung einer physikalischen, chemischen und/oder biologischen Eigenschaft des insbesondere fließfähigen Mediums (50.5) verwendet wird.

5. Verfahren gemäß einem der vorangegangenen Ansprüche,
**dadurch gekennzeichnet, dass**
die Strahlungsquelle (16) der Strahlungseinrichtung (19) eine Infrarotstrahlung zumindest indirekt an die Strahlungssenke (17) der Strahlungseinrichtung (19) sendet, welche von einer zu ermittelnden physikalischen, chemischen und/oder biologischen Eigenschaft des insbesondere fließfähigen Medium (50.5) zumindest teilweise absorbiert und/oder reflektiert und/oder gestreut wird.

6. Verfahren gemäß einem der vorangegangenen Ansprüche,
**dadurch gekennzeichnet, dass**
eine Wellenlänge der ausgesandten elektromagnetischen Strahlung (18) zumindest zeitweise während der Ermittlung der Geometrie des Behältnisses (50) und/oder der Ermittlung der physikalischen, chemischen und/oder biologischen Eigenschaft des insbesondere fließfähigen Mediums (50.5) variiert wird.

7. Vorrichtung (10) zur Ermittlung einer Geometrie eines Behältnisses (50) zur Verpackung eines insbesondere fließfähigen Mediums (50.5), aufweisend
- eine Bewegungseinrichtung (13) zum Drehen und/oder Schwenken des Behältnisses (50) um eine Drehachse (13.2);
- eine Strahlungseinrichtung (19) zum Erzeugen und Aussenden zumindest elektromagnetischer Strahlung (18) von einer Strahlungsquelle (16) der Strahlungseinrichtung (19) entlang eines Detektionsbereiches (D) zu einer Strahlungssenke (17) der Strahlungseinrichtung (19);
- eine Detektionseinrichtung (70) zum Detektieren einer Durchlaufzeit eines Behältnisbereiches durch den Detektionsbereich (D) und
- eine Auswerteeinrichtung (71) zum Ermitteln einer äußeren Geometrie (70.8) des Behältnisses (50) basierend auf der Durchlaufzeit,
wobei die Vorrichtung eine Berechnungseinrichtung (23) aufweist, weiche ausgebildet ist, ein und dieselbe Strahlungseinrichtung (19) auch zur optischen Messung einer zumindest physikalischen, chemischen oder biologischen Eigenschaft des fließfähigen Mediums (50.5) zu verwenden.

8. Vorrichtung (10) gemäß Anspruch 7,
**dadurch gekennzeichnet, dass**
die Berechnungseinrichtung (23) weiterhin eingerichtet ist zur Berechnung der inneren Geometrie (50.7) aus einem Wert der äußeren Geometrie (50.8) und einem Wert einer Wandstärke (50.9) des Behältnisses (50).

9. Vorrichtung (10) gemäß einem der vorangegangenen Ansprüche 7 oder 8,
**dadurch gekennzeichnet, dass**
die Strahlungsquelle (16) der Strahlungseinrichtung (19) gleichzeitig die Strahlungssenke (17) ist.

10. Vorrichtung (10) gemäß einem der vorangegangenen Ansprüche 7 bis 9,
**dadurch gekennzeichnet, dass**
die Strahlungsquelle (16) der Strahlungseinrichtung (19) ein Laser zum Aussenden zumindest eines Laserstrahles und/oder die Strahlungssenke (17) der Strahlungseinrichtung (19) ein Fotodetektor zum Empfangen des Laserstrahles ist.

11. Vorrichtung (10) gemäß einem der vorangegangenen Ansprüche 7 bis 10,
**dadurch gekennzeichnet, dass**
die Vorrichtung (10) eine Aufnahmeeinrichtung (12) wenigstens zum zumindest teilweisen Aufnehmen des Behältnisses (50) aufweist.

12. Vorrichtung (10) einem der vorangegangenen Ansprüche 7 bis 11
**dadurch gekennzeichnet, dass**
die Vorrichtung (10) zur Ausführung des Verfahrens gemäß wenigstens einem der Ansprüche 1 bis 6 dient.

## Claims

1. Method for establishing a geometry of a container (50) for packaging a medium (50.5), in particular a flowable medium, comprising the steps:
- activating a radiation device (19) for generating and emitting at least electromagnetic radiation (18) from a radiation source (16) of the radiation device (19) along a detection region (D) to a radiation sink (17) of the radiation device (19);
- rotating and/or pivoting the container (50) by means of a movement device (13) about an axis of rotation (13.2), wherein at least one container region is moved through at least one section of the detection region (D) at least temporarily during a rotational movement of the container (50);
- detecting a transit time of the container region through the detection region (D) by means of a detection device (70), and
- establishing an outer geometry (50.8) at least from the transit time by means of an evaluation device (71),
wherein the same radiation device (19) also serves for optical measurement of at least one physical, chemical or biological property of the flowable medium (50.5).

2. Method according to claim 1 ,
**characterized in that**
an inner geometry (50.7) of the container (50) is established from a value of the outer geometry (50.8) and a value of a wall thickness (50.9) of the container (50).

3. Method according to any one of the preceding claims,
**characterized in that**
at least one value of the wall thickness (50.9) of the container (50) is established by means of the radiation device (19) and/or by means of a further radiation device.

4. Method according to any one of the preceding claims,
**characterized in that**
the radiation device (19) is used temporally during and/or temporally subsequently to the establishment of the geometry of the container for establishing a physical, chemical and/or biological property of the, in particular flowable, medium (50.5).

5. Method according to any one of the preceding claims,
**characterized in that**
the radiation source (16) of the radiation device (19) emits an infrared radiation at least indirectly to the radiation sink (17) of the radiation device (19), which is at least partially absorbed and/or reflected and/or scattered by a physical, chemical and/or biological property of the, in particular flowable, medium (50.5).

6. Method according to any one of the preceding claims,
**characterized in that**
a wavelength of the emitted electromagnetic radiation (18) is varied at least temporarily during the establishment of the geometry of the container (50) and/or the establishment of the physical, chemical and/or biological property of the, in particular flowable, medium (50.5).

7. Device (10) for establishing a geometry of a container (50) for packaging a, in particular flowable, medium (50.5), comprising
- a movement device (13) for rotating and/or pivoting the container (50) about an axis of rotation (13.2);
- a radiation device (19) for generating and emitting at least electromagnetic radiation (18) from a radiation source (16) of the radiation device (19) along a detection region (D) to a radiation sink (17) of the radiation device (19);
- a detection device (70) for detecting a transit time of a container region through the detection region (D), and
- an evaluation device (71) for establishing an outer geometry (70.8) of the container (50) based on the transit time,
wherein the device comprises a calculation device (23) which is designed to use the same radiation device (19) also for optical measurement of at least one physical, chemical or biological property of the flowable medium (50.5).

8. Device (10) according to claim 7,
**characterized in that**
the calculation device (23) is further designed to calculate the inner geometry (50.7) from a value of the outer geometry (50.8) and a value of a wall thickness (50.9) of the container (50).

9. Device (10) according to any of the preceding claims 7 or 8,
**characterized in that**
the radiation source (16) of the radiation device (19) is simultaneously the radiation sink (17).

10. Device (10) according to any of the preceding claims 7 to 9,
**characterized in that**
the radiation source (16) of the radiation device (19) is a laser for emitting at least one laser beam and/or the radiation sink (17) of the radiation device (19) is a photodetector for receiving the laser beam.

11. Device (10) according to any one of the preceding claims 7 to 10,
**characterized in that**
the device (10) comprises a receiving device (12) at least for at least partially receiving the container (50).

12. Device (10) according to any one of the preceding claims 7 to 11,
**characterized in that**
the device (10) is for carrying out the method according to at least one of claims 1 to 6.

## Revendications

1. Procédé de détermination de la géométrie d'un contenant (50) pour l'emballage d'un milieu (50.5), en particulier fluide, comprenant les étapes suivantes :
- Activation d'un dispositif de rayonnement (19) pour générer et émettre au moins un rayonnement électromagnétique (18) à partir d'une source de rayonnement (16) du dispositif de rayonnement (19) le long d'une zone de détection (D) vers un puits de rayonnement (17) du dispositif de rayonnement (19) ;
- Rotation et/ou pivotement du contenant (50) au moyen d'un dispositif de déplacement (13) autour d'un axe de rotation (13.2), au moins une zone du contenant étant déplacée à travers au moins une section de la zone de détection (D) au moins temporairement pendant un mouvement de rotation du contenant (50) ;
- Détection d'un temps de transit de la zone de contenant à travers la zone de détection (D) au moyen d'un dispositif de détection (70) et
- Détermination d'une géométrie externe (50.8) au moins à partir du temps de transit au moyen d'un dispositif d'évaluation (71),
dans lequel le même dispositif de rayonnement (19) est également utilisé pour la mesure optique d'au moins une propriété physique, chimique ou biologique du milieu fluide (50.5).

2. Procédé selon la revendication 1,
**caractérisé en ce qu'**
une géométrie intérieure (50.7) du contenant (50) est déterminée à partir d'une valeur de la géométrie extérieure (50.8) et d'une valeur d'une épaisseur de paroi (50.9) du contenant (50).

3. Procédé selon l'une des revendications précédentes,
**caractérisé en ce qu'**
au moins une valeur de l'épaisseur de la paroi (50.9) du contenant (50) est déterminée au moyen du dispositif de rayonnement (19) et/ou au moyen d'un autre dispositif de rayonnement.

4. Procédé selon l'une des revendications précédentes,
**caractérisé en ce que**
le dispositif de rayonnement (19) est utilisé temporairement pendant et/ou après la détermination de la géométrie du contenant pour la détermination d'une propriété physique, chimique et/ou biologique du milieu (50.5) en particulier fluide.

5. Procédé selon l'une des revendications précédentes,
**caractérisé en ce que**
la source de rayonnement (16) du dispositif de rayonnement (19) émet au moins indirectement un rayonnement infrarouge vers le puits de rayonnement (17) du dispositif de rayonnement (19), qui est au moins partiellement absorbé et/ou réfléchi et/ou diffusé par une propriété physique, chimique et/ou biologique à déterminer du milieu (50.5), en particulier fluide.

6. Procédé selon l'une des revendications précédentes,
**caractérisé en ce qu'**
une longueur d'onde du rayonnement électromagnétique émis (18) est modifiée au moins temporairement pendant la détermination de la géométrie du contenant (50) et/ou la détermination de la propriété physique, chimique et/ou biologique du milieu (50.5) en particulier fluide.

7. Dispositif (10) pour déterminer la géométrie d'un contenant (50) pour l'emballage d'un milieu (50.5), en particulier fluide, comprenant
- un dispositif de déplacement (13) pour faire tourner et/ou pivoter le contenant (50) autour d'un axe de rotation (13.2) ;
- un dispositif de rayonnement (19) pour générer et émettre au moins un rayonnement électromagnétique (18) à partir d'une source de rayonnement (16) du dispositif de rayonnement (19) le long d'une zone de détection (D) vers un puits de rayonnement (17) du dispositif de rayonnement (19) ;
- un dispositif de détection (70) pour détecter un temps de transit d'une zone de contenant à travers la zone de détection (D), et
- un dispositif d'évaluation (71) permettant de déterminer une géométrie extérieure (70.8) du contenant (50) sur la base du temps de transit,
dans lequel le dispositif comprend un dispositif de calcul (23) qui est adapté pour utiliser le même dispositif de rayonnement (19) également pour la mesure optique d'au moins une propriété physique, chimique ou biologique du milieu fluide (50.5).

8. Dispositif (10) selon la revendication 7,
**caractérisé en ce que**
le dispositif de calcul (23) est en outre adapté pour calculer la géométrie intérieure (50.7) à partir d'une valeur de la géométrie externe (50.8) et d'une valeur d'une épaisseur de paroi (50.9) du contenant (50).

9. Dispositif (10) selon l'une des revendications précédentes 7 ou 8,
**caractérisé en ce que**
la source de rayonnement (16) du dispositif de rayonnement (19) est en même temps le puits de rayonnement (17).

10. Dispositif (10) selon l'une des revendications précédentes 7 à 9,
**caractérisé en ce que**
la source de rayonnement (16) du dispositif de rayonnement (19) est un laser pour l'émission d'au moins un faisceau laser et/ou le puits de rayonnement (17) du dispositif de rayonnement (19) est un photodétecteur pour la réception du faisceau laser.

11. Dispositif (10) selon l'une des revendications précédentes 7 à 10,
**caractérisé en ce que**
le dispositif (10) comprend un dispositif de réception (12) pour recevoir au moins partiellement le contenant (50).

12. Dispositif (10) selon l'une des revendications précédentes 7 à 11,
**caractérisé en ce que**
le dispositif (10) est destiné à mettre en oeuvre le procédé selon au moins une des revendications 1 à 6.
